(19) Europäisches Patentamt
European Patent Office
Office européen des brevets

(11) Publication number: 0 064 838 A1

(12) # EUROPEAN PATENT APPLICATION

(21) Application number: 82302190.2

(22) Date of filing: 28.04.82

(51) Int. Cl.[3]: C 25 B 13/08
C 08 J 5/22

(30) Priority: 01.05.81 US 259424

(43) Date of publication of application:
17.11.82 Bulletin 82/46

(84) Designated Contracting States:
AT BE CH DE FR GB IT LI LU NL SE

(71) Applicant: E.I. DU PONT DE NEMOURS AND COMPANY
Legal Department 1007 Market Street
Wilmington Delaware 19898(US)

(72) Inventor: Copeland, Terry Michael
2416 Donlon Road Chatham
Wilmington Delaware 19803(US)

(72) Inventor: Li, Stephen
27102 Valley Run Drive
Wilmington Delaware 19810(US)

(72) Inventor: Johnson, Bruce Bjorge
315 Palmers Lane
Wallingford Pennsylvania 19086(US)

(74) Representative: Myerscough, Philip Boyd et al.
J.A.Kemp & Co. 14, South Square Gray's Inn
London, WC1R 5EU(GB)

(54) **Composite membrane/electrode, electrochemical cell and electrolysis process.**

(57) A composite membrane/electrode, process for making same, an electrochemical cell and its use in the electrolysis of alkali metal halides, especially sodium chloride, are described. The composite membrane/electrode comprises a perfluorinated ion-exchange membrane having at least a layer of polymer having $-OCF_2CF_2COOM$ moieties and a layer of polymer having sulfonic functionality, and a stratum of electrocatalyst bonded to at least one surface thereof. A chloroalkali cell with such a composite membrane/electrode operates at low voltage, high current efficiency, and low power consumption.

EP 0 064 838 A1

TITLE

# Composite Membrane/Electrode, Electrochemical Cell and Electrolysis Process

## BACKGROUND OF THE INVENTION

Fluorinated ion exchange polymers having carboxylic acid and/or sulfonic acid functional groups or salts thereof are known in the art. One principal use of such polymers is as a component of a membrane used to separate the anode and cathode compartments of a chloralkali electrolysis cell. Such membrane can be in the form of a reinforced or unreinforced film or laminar structure.

It is desirable for use in a chloralkali cell that a membrane provides for operation at low voltage and high current efficiency, and thereby at low power consumption, so as to provide products of high purity at low cost, especially in view of today's steadily increasing cost of energy.

It is a principal object of this invention to provide for improved operation of electrochemical cells, more specifically, electrolysis cells such as a chloralkali cell, at high current efficiency and low voltage, and thereby at low power consumption, and fuel cells.

A more specific object is to provide an electrochemical cell and process, particularly a chloralkali cell and process, and membrane therefor, which provide for lower total cell voltage. Inasmuch as there is a significant voltage drop in the electrolyte in each cell compartment, an even more specific object is to provide improvements which will enable membrane cells to be operated with either or both electrodes in contact with the ion exchange membrane at commercially useful voltage and power consumption.

Other objects and advantages will become apparent hereinbelow.

While the description herein is written in terms of a chloralkali process for electrolyzing sodium chloride, it should be understood that the invention is applicable to alkali metal halides, especially alkali metal chloride.

SUMMARY OF THE INVENTION

Briefly, according to the invention, there is provided a composite membrane/electrode wherein the membrane has at least two layers of fluorinated ion exchange polymer, one layer which has sulfonic functional groups and which, in use, faces toward the anode compartment of an electrochemical cell, and another layer which has $-OCF_2CF_2COOM$ moieties, and wherein at least one of the surfaces of the membrane carries an electrocatalyst bonded thereto. The term "electrocatalyst" is used herein to refer to a substance which catalyzes or otherwise promotes the chemical action occurring in one of the compartments of an electrochemical cell, e.g., by reducing overvoltage.

More specifically, in one aspect of the invention, there is provided a composite membrane/electrode which consists of an ion exchange membrane which is impermeable to hydraulic flow of liquid and which comprises at least first and second layers of perfluorinated polymer each having $-OCF_2CF_2COOM$ moieties and/or $-SO_3M$ functional groups, where M is Na or K, and equivalent weight up to about 2000, adjacent said layers being in adherent contact with one another, said first layer being of polymer which has $-SO_3M$ functional groups and being at a first surface of said membrane, said second layer being of polymer which has $-OCF_2CF_2COOM$

moieties, and electrocatalyst bonded to at least one exposed surface of said membrane with a polymeric fluorocarbon binder, such that said electrocatalyst is in the form of at least one gas- and electrolyte-permeable stratum.

In another aspect of the invention there is provided an electrochemical cell in which such a composite membrane/electrode is incorporated.

In yet another aspect of the invention there is provided an electrolysis process which is carried out in such an electrochemical cell.

DETAILED DESCRIPTION OF THE INVENTION

The membranes with which the present invention is concerned are typically prepared from two or more layers of fluorinated polymer which each have $-OCF_2CF_2COOR$ moieties and/or $-SO_2W$ functional groups, where R is lower alkyl and W is F or Cl, and optionally a web of support material.

The carboxylic polymer with which the present invention is concerned is typically a carboxylic polymer having a fluorinated hydrocarbon backbone chain to which are attached $-OCF_2CF_2COOR$ moieties or pendant side chains which in turn carry such moieties. More specifically, the polymers can be prepared from monomers which are fluorinated or fluorine-substituted vinyl compounds. The polymers are usually made from at least two monomers. At least one monomer is a fluorinated vinyl compound such as vinyl fluoride, hexafluoropropylene, vinylidene fluoride, trifluoroethylene, chlorotrifluoroethylene, perfluoro(alkyl vinyl ether), tetrafluoroethylene and mixtures thereof. In the case of copolymers which will be used in electrolysis of brine, the precursor vinyl monomer desirably will not contain hydrogen. Additionally,

at least one monomer is a fluorinated monomer which contains a group which can be hydrolyzed to a $-OCF_2CF_2COOM$ moiety, e.g., a carboalkoxy or nitrile group, in a $-OCF_2CF_2V$ moiety where V is -COOR or -CN and R is lower alkyl, ordinarily $CH_3$, $C_2H_5$, or $C_3H_7$.

By "fluorinated polymer" is meant a polymer in which, after loss of the R group by hydrolysis to ion exchange form, the number of F atoms is at least 90% of the number of F atoms and H atoms.

The monomers, with the exception of the R group in the -COOR, will preferably not contain hydrogen, especially if the polymer will be used in the electrolysis of brine, and for greatest stability in harsh environments, most preferably will be free of both hydrogen and chlorine, i.e., will be perfluorinated; the R group need not be fluorinated as it is lost during hydrolysis when the functional groups are converted to ion exchange groups.

An exemplary suitable type of such carboxyl-containing monomer is represented by the formula

$$CF_2{=}CF{+}OCF_2\underset{\displaystyle Y}{\underset{|}{C}}F{+}_sOCF_2{-}CF_2 - V$$

wherein

V is -COOR or -CN,

R is lower alkyl,

Y is F or $CF_3$, and

s is 0, 1 or 2.

The most preferred monomers are those wherein V is -COOR wherein R is lower alkyl, generally $C_1$ to $C_5$, because of ease in polymerization and conversion to ionic form. Those monomers wherein s

is 1 are also preferred because their preparation and isolation in good yield is more easily accomplished than when s is 0 or 2. Preparation of those monomers wherein V is -COOR where R is lower alkyl, and copolymers thereof, is described in U.S. Patent Nos. 4,131,740, 4,138,426 and 4,247,713. The compounds

$CF_2=CFOCF_2CFOCF_2CF_2COOCH_3$, and
|
$CF_3$

$CF_2=CFO(CF_2CFO)_2CF_2CF_2COOCH_3$,
|
$CF_3$

whose preparation is described therein, are especially useful monomers. Preparation of monomers wherein V is -CN is described in U.S. Patent No. 3,852,326.

Such copolymers with which the present invention is concerned can be prepared by techniques known in the art, e.g., U.S. Patent No. 3,528,954, U.S. Patent No. 4,131,740, and South African Patent No. 78/2225.

The sulfonyl polymer with which the present invention is concerned is typically a polymer having a fluorinated hydrocarbon backbone chain to which are attached the functional groups or pendant side chains which in turn carry the functional groups. The pendant side chains can contain, for example,

$-CF_2-CF-SO_2W$ groups wherein $R_f$ is F, Cl, or a
|
$R_f$

$C_1$ to $C_{10}$ perfluoroalkyl radical, and W is F or Cl, preferably F. Ordinarily, the functional group in the side chains of the polymer will be present in terminal $-O-CF_2-CFSO_2F$
|
$R_f$

groups. Examples of fluorinated polymers of this kind are disclosed in U.S. Patent No. 3,282,875, U.S.

Patent No. 3,560,568 and U.S. Patent No. 3,718,627. More specifically, the polymers can be prepared from monomers which are fluorinated or fluorine substituted vinyl compounds. The polymers are made from at least two monomers, with at least one of the monomers coming from each of the two groups described below.

At least one monomer is a fluorinated vinyl compound such as vinyl fluoride, hexafluoropropylene, vinylidene fluoride, trifluoroethylene, chlorotrifluoroethylene, perfluoro(alkyl vinyl ether), tetrafluoroethylene and mixtures thereof. In the case of copolymers which will be used in electrolysis of brine, the precursor vinyl monomer desirably will not contain hydrogen.

The second group is the sulfonyl-containing monomers containing the precursor group $-CF_2-\underset{\displaystyle R_f}{\underset{|}{CF}}-SO_2F$, wherein $R_f$ is as defined above. Additional examples can be represented by the general formula $CF_2=CF-T_k-CF_2SO_2F$ wherein T is a bifunctional fluorinated radical comprising 1 to 8 carbon atoms, and k is 0 or 1. Substituent atoms in T include fluorine, chlorine, or hydrogen, although generally hydrogen will be excluded in use of the copolymer for ion exchange in a chloralkali cell. The most preferred polymers are free of both hydrogen and chlorine attached to carbon, i.e., they are perfluorinated, for greatest stability in harsh environments. The T radical of the formula above can be either branched or unbranched, i.e., straight-chain, and can have one or more ether linkages. It is preferred that the vinyl radical in this group of sulfonyl fluoride containing comonomers be joined to the T group through an ether linkage,

i.e., that the comonomer be of the formula $CF_2=CF-O-T-CF_2-SO_2F$. Illustrative of such sulfonyl fluoride containing comonomers are

$CF_2=CFOCF_2CF_2SO_2F$,

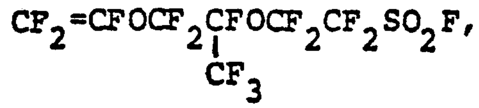

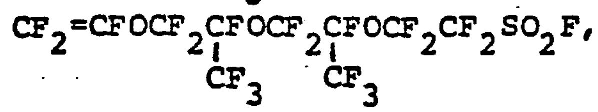

$CF_2=CFCF_2CF_2SO_2F$, and

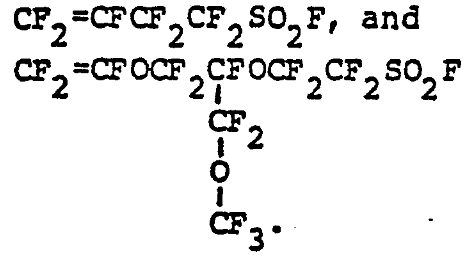

The most preferred sulfonyl fluoride containing comonomer is perfluoro(3,6-dioxa-4-methyl-7-octenesulfonyl fluoride),

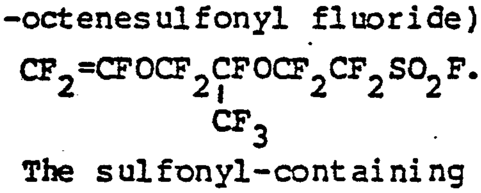

The sulfonyl-containing monomers are disclosed in such references as U.S. Patent No. 3,282,875, U.S. Patent No. 3,041,317, U.S. Patent No. 3,718,627 and U.S. Patent No. 3,560,568.

A preferred class of such polymers is represented by polymers having the repeating units

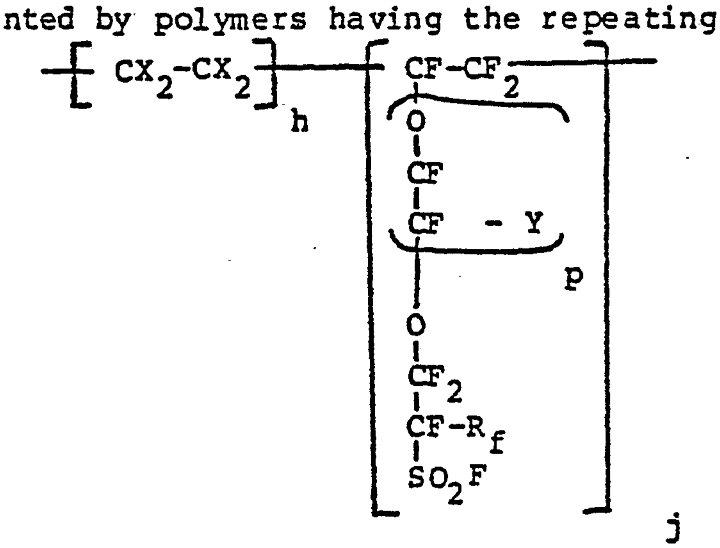

wherein

h is 3 to 15,

j is 1 to 10,

p is 0, 1 or 2,

the X's taken together are four fluorines or three fluorines and one chlorine,

Y is F or $CF_3$, and

$R_f$ is F, Cl or a $C_1$ to $C_{10}$ perfluoroalkyl radical.

A most preferred copolymer is a copolymer of tetrafluoroethylene and perfluoro(3,6-dioxa-4-methyl-7-octenesulfonyl fluoride).

Such copolymers used in the present invention can be prepared by general polymerization techniques developed for homo- and copolymerizations of fluorinated ethylenes, particularly those employed for tetrafluoroethylene which are described in the literature. Nonaqueous techniques for preparing the copolymers include that of U.S. Patent No. 3,041,317, that is, by the polymerization of a mixture of the major monomer therein, such as tetrafluoroethylene, and a fluorinated ethylene containing a sulfonyl fluoride group in the presence of a free radical initiator, preferably a perfluorocarbon peroxide or azo compound, at a temperature in the range 0-200°C and at pressures in the range of $10^5$ to $2x10^7$ pascals (1-200 Atm.) or higher. The nonaqueous polymerization may, if desired, be carried out in the presence of a fluorinated solvent. Suitable fluorinated solvents are inert, liquid, perfluorinated hydrocarbons, such as perfluoromethylcyclohexane, perfluorodimethylcyclobutane, perfluorooctane, perfluorobenzene and the like, and inert, liquid chlorofluorocarbons such as 1,1,2-trichloro-1,2-2-trifluoroethane, and the like.

Aqueous techniques for preparing the copolymer include contacting the monomers with an aqueous medium containing a free-radical initiator to obtain a slurry of polymer particles in non-water-wet or granular form, as disclosed in U.S. Patent No. 2,393,967, or contacting the monomers with an aqueous medium containing both a free-radical initiator and a telogenically inactive dispersing agent, to obtain an aqueous colloidal dispersion of polymer particles, and coagulating the dispersion, as disclosed, for example, in U.S. Patent No. 2,559,752 and U.S. Patent No. 2,593,583.

A copolymer which contains different types of functional groups can also be used as one of the component films in making the membrane of the invention. For example, a terpolymer prepared from a monomer chosen from the group of nonfunctional monomers described above, a monomer from the group of carboxylic monomers described above, and additionally a monomer from the group of sulfonyl monomers described above, can be prepared and used as one of the film components in making the membrane.

It is further possible to use as one of the component films of the membrane a film which is a blend of two or more polymers. For example, a blend of a polymer having sulfonyl groups in melt-fabricable form with a polymer having carboxyl groups as described above in melt-fabricable form can be prepared and used as one of the component films of the membrane of this invention.

It is additionally possible to use a laminar film as one of the component films in making the membrane. For example, a film having a layer of a copolymer having sulfonyl groups in melt-fabricable form and a layer of a copolymer having carboxyl

groups as described above in melt-fabricable form, can also be used as one of the component films in making the membrane of the invention.

When used in a film or membrane to separate the anode and cathode compartments of an electrolysis cell, such as a chloralkali cell, the polymers dealt with herein, after conversion to ionizable form, should have equivalent weights as specified below. Above the indicated upper limits the electrical resistivity becomes too high, and below the indicated lower limits the mechanical properties are poor because of excessive swelling of the polymer. The relative amounts of the comonomers which make up the polymer should be adjusted or chosen such that each polymer has an equivalent weight no greater than about 2000, preferably no greater than about 1400 or 1500, for use as an ion exchange barrier in an electrolytic cell. The equivalent weight above which the resistance of a film or membrane becomes too high for practical use in an electrolytic cell varies somewhat with the thickness of the film or membrane. For thinner films and membranes, equivalent weights up to about 2000 can be tolerated. For most purposes, however, and for membranes of ordinary thickness, a value no greater than about 1400 is preferred.

An essential component of the membrane with which the invention is concerned is a first layer of a fluorinated polymer which has $-SO_3Na$ or $-SO_3K$ functional groups, which has an equivalent weight in the range of 800 to 2000, preferably 950 to 1500, most preferably 1050 to 1200. The thickness of the first layer of fluorinated polymer is ordinarily 13 to 200 microns, preferably 25 to 150 microns.

Another essential component of the membrane with which the invention is concerned is a second layer of a fluorinated polymer which has $-OCF_2CF_2COOM$ moities where M is Na or K, which has an equivalent weight in the range of 400 to 2000, preferably 800 to 1400, most preferably 1000 to 1150. The thickness of this second layer is ordinarily in the range of 13 to 250 microns (0.5 to 10 mils), preferably 25 to 75 microns (1 to 3 mils), but can be as little as 1 micron. The thickness of the first and second layers taken together should be in the range of 26 to 250 microns (1 to 10 mils), preferably 26 to 200 microns (1 to 6 mils).

Such carboxylic polymer as specified above is required as the polymer of the second layer of the composite membrane/electrode of the invention because of its superior thermal stability in the presence of caustic, especially hot concentrated caustic, and the superior thermal stability of a composite membrane/electrode which includes such polymer, when these are compared to perfluorinated polymer which contains, e.g., $-OCF_2COOM$ functional groups where M is Na or K, and to composite/membrane electrode which includes a layer of that polymer. The less thermally stable polymer with $-OCF_2COOM$ groups more readily decarboxylates to a higher equivalent weight, which leads to the disadvantages of a higher operating voltage, or of lower current density at the same voltage. The polymers with $-OCF_2CF_2COOM$ moieties are advantageous over those with $-O(CF_2)_nCOOM$ moieties where n is 3 or greater because the latter are more difficult and more expensive to synthesize.

As employed herein, the term "membrane" refers to both reinforced and unreinforced structures. Unreinforced structures contain the two

required layers of fluorinated ion exchange polymer, and optionally additional layers of fluorinated ion exchange polymer. Reinforced structures are like the unreinforced structures, and additionally contain a woven or knit reinforcing fabric, non-woven paper, porous sheet of a kind now well known in this art and usually fabricated of a perfluorocarbon polymer, or an electrically conductive metal member, which serves to increase certain physical properties, such as tear strength, of the membrane. In the case of reinforced membranes, the reinforcement may optionally also include sacrificial members such as rayon fibers which degrade and disappear under the conditions which prevail in an operating chloralkali cell.

One preferred membrane for use in the invention is that wherein said second layer contacts said first layer and is at a second surface of said membrane.

Another preferred membrane for use in the invention is that wherein there is a third layer of said perfluorinated polymer, said second layer being between said first and third layers, said third layer being at a second surface of said membrane, the polymer of said third layer having $-SO_3M$ functional groups.

Still another preferred membrane for use in the invention is that wherein there is a third layer of said perfluorinated polymer, said third layer being between said first and second layers, said second layer being at a second surface of said membrane, the polymer of said third layer having $-SO_3M$ functional groups and having an equivalent weight higher than that of the polymer of said first layer. In this case, an especially preferred membrane is that wherein said first layer has an

equivalent weight of 1100 to 1500, said third layer has an equivalent weight in the range of 1100 to 1600 and at least 100 higher than that of said first layer, and said second layer has an equivalent weight at least about 200 lower than that of said third layer.

In all cases, adjacent layers of the membrane are in adherent contact with one another.

A composite membrane/electrode which is based on such multilayered membrane as specified in this invention is superior to membrane/electrode based on a simple single-layered membrane. Thus, although membrane/electrode based on a membrane having only a layer of polymer with sulfonic groups operates at low voltage, it has poor current efficiency and cannot be used to make highly concentrated caustic. Although membrane/electrode based on a membrane having only a layer of polymer with carboxylic groups can be used to make concentrated caustic at good current efficiency, it does so only at high voltage at the penalty of higher power cost, or alternatively at low voltage and low current density at the penalty of higher investment and greater floor space to make a given amount of product. The composite membrane/electrode as specified herein provides for operation at both low voltage and high current efficiency while making concentrated caustic.

The membrane can be made from the component layers of film, support material if present, and metal member if present, with the aid of heat and pressure. Temperatures of about 200°C to 300°C are ordinarily required to fuse the polymer films employed. The temperature required may be even above or below this range, however, and will depend on the

specific polymer or polymers used. The choice of a suitable temperature in any specific case will be clear, inasmuch as too low a temperature will fail to effect an adequate degree of adherence of films and fabric to each other, and too high a temperature will cause leaks to form. Pressures of as little as about $2x10^4$ pascals, to pressures exceeding $10^7$ pascals can be used. A hydraulic press is a suitable apparatus for making the membrane, in which case typical pressures are in the range of $2x10^5$ to $10^7$ pascals.

Another apparatus, suitable for continuous preparation of membrane, comprises a hollow roll with an internal heater and an internal vacuum source. The hollow roll contains a series of circumferential slots on its surface which allow the internal vacuum source to draw component materials in the direction of the hollow roll. The vacuum draws the component materials of the membrane onto the hollow roll, such that typical air pressure against the component materials is in the range of $5x10^4$ to $10^5$ pascals. A curved stationary plate with a radiant heater faces the top surface of the hollow roll with a spacing of about 6 mm (1/4 inch) between their two surfaces.

During a lamination run, porous release paper is used in contacting the hollow roll as a support material to prevent adherence of any component material to the roll surface and to allow vacuum to pull component materials in the direction of the hollow roll. Feed and takeoff means are provided for the component materials and product. In the feed means one idler roll of smaller diameter than the hollow roll is provided for release paper and component materials. The feed and takeoff means

are positioned to allow component materials to pass around the hollow roll over a length of about 5/6 of its circumference. A further idler roll is provided for the release paper allowing its separation from the other materials. Takeoff means are provided for the release paper and the product membrane.

When the membrane includes therein an electrically conductive metal member in the form of wire, screen or porous sheet, said metal member can be included as one of the component elements combined during the lamination process with heat and pressure as just described. In such case, the process is carried out so as to have the metal member either completely embedded in, or embedded in but exposed at, one of the two exterior surfaces of the membrane. It is an easy matter to determine whether the metal member is or is not in fact exposed at the surface by seeing whether electrical contact can be made with the metal member at the surface.

For use in ion exchange applications and in cells, for example a chloralkali cell for electrolysis of brine, the membrane should have substantially all of the functional groups converted to ionizable functional groups. These groups can be $-OCF_2CF_2COOM$ moieties and $-SO_3M$ groups, where M is Na or K. Such conversion is ordinarily and conveniently accomplished by hydrolysis with acid or base, such that the various functional groups described above in relation to the melt-fabricable polymers are converted respectively to the free acids or the alkali metal salts thereof. Such hydrolysis can be carried out with an aqueous solution of a mineral acid or an alkali metal hydroxide. Base hydrolysis is preferred as it is faster and more complete. Use of hot solutions, such as near the

boiling point of the solution, is preferred for rapid hydrolysis. The time required for hydrolysis increases with the thickness of the structure. It is also of advantage to include a water-miscible organic compound such as dimethylsulfoxide in the hydrolysis bath. The free carboxylic and sulfonic acids are convertible to salts with NaOH or KOH.

The membrane described herein is impermeable to hydraulic flow of liquid at the typical low pressures which occur during operation of a chloralkali cell. (A diaphragm, which is porous, permits hydraulic flow of liquid therethrough with no change in composition, while an ion exchange membrane permits selective permeation by ions and permeation of liquid by diffusion or electroosmosis, such that the material which penetrates the membrane differs in composition from the liquid in contact with the membrane.) It is an easy matter to determine whether there is or is not hydraulic flow of liquid by a leak test with gas or liquid.

The copolymers used in the membrane decribed herein should be of high enough molecular weight to produce films which are at least moderately strong in both the melt-fabricable precursor form and in the hydrolyzed ion exchange form.

The composite membrane/electrode of the invention consists of a membrane as described above, and electrocatalyst bonded to at least one exposed surface thereof with a fluoropolymer binder as specified hereinbelow, such that the electrocatalyst is in the form of at least one gas- and electrolyte-permeable stratum.

The electrocatalyst composition may vary depending on which side of the membrane it is bonded to.

The first surface of the membrane will face toward the anode compartment, and the second surface toward the cathode compartment, when employed in chloroalkali electrolysis.

Electrocatalysts which are suitable for a stratum A bonded to the surface of the membrane facing the anode compartment, i.e., anodic electrocatalysts, include, but are not limited to, platinum group metals, electroconductive platinum group metal oxides and reduced oxides, and graphite. The platinum group metals include platinum, palladium, iridium, rhodium, ruthenium and osmium. Mixtures thereof can be used. Reduced oxides of a valve metal such as titanium, tantalum, niobium, zirconium, hafnium, vanadium or tungsten can be added. Heating to a temperature below that at which such oxides decompose stabilizes them against oxygen, chlorine, and the harsh electrolysis conditions.

An anodic electrocatalyst preferably comprises reduced oxides of ruthenium or such oxides in combination with at least one reduced oxide from the group consisting of the reduced oxides of iridium, tantalum, titanium, niobium, and hafnium, preferably iridium. More preferably a combination of 75 to 95% by wt., most preferably 75% by wt., of reduced oxides of ruthenium, and 25 to 5% by wt., most preferably 25% by wt., of reduced oxides of iridium is used. It is best to thermally stabilize the reduced oxides of ruthenium by heating, to produce a composition which is stable against chlorine and oxygen evolution. Such electrocatalyst, its stabilization by heating, bonding with a fluorocarbon polymer, and application to a substrate membrane in decal form are described in U.S. Patents

4,224,121 and 3,134,697, and UK Patent Application GB 2 009 788 A.

Electrocatalysts which are suitable for a stratum B bonded to in the surface of the membrane facing the cathode compartment, i.e., cathodic electrocatalysts, include, but are not limited to, platinum such as platinum black, palladium, electroconductive platinum group metal oxides and reduced oxides; gold; silver; spinels; manganese, cobalt, nickel, iron, and oxides and alloys thereof; Raney nickel; alpha-iron and graphite. A preferred type of cathodic electrocatalyst is one which provides low cathodic overvoltage, e.g., platinum black.

Fluorocarbon polymers which can be used for bonding the electrocatalyst particles together and to the substrate membrane are those having no functional groups, such as polytetrafluoroethylene.

The electrocatalyst is bonded to the membrane in the form of a stratum which is gas- and electrolyte-permeable. Ordinarily, the electrocatalyst is in the form of particles which are bonded together by the binder.

Various composite membrane/electrode constructions are possible. A composite membrane/electrode can contain only an anodic electrocatalyst stratum A, or only a cathodic electrocatalyst stratum B, or both.

An electrocatalyst stratum is suitably fabricated as a decal by making a slurry of the electrocatalyst in an aqueous polytetrafluoroethylene dispersion, coating or spreading the dispersion into a uniform layer between aluminum foils, and then heating under pressure, as described in, e.g., U.K. Patent Application GB 2 009 788A. Suitable release

sheets such as polyimide film can be used in place of the aluminum foils. The decal can be incorporated into a composite membrane/electrode after membrane fabrication in a separate lamination step with heat and pressure. The slurry of electrocatalyst in polymer binder can also be applied directly to the substrate membrane, dried, and heated under pressure.

Inasmuch as it is preferred that the electrocatalyst stratum have a relatively uniform thickness, it is best either to use a flat substrate membrane which contains no reinforcing member or to fabricate it against resilient sheets in a press so as to force it uniformly against uneven areas of the surface.

The term membrane/electrode is employed herein for a composite in which electrocatalyst is bonded to a membrane, inasmuch as said electrocatalyst functions in an electrolysis cell as the electrode in that compartment of the cell which the electrocatalyst stratum faces when a current collector in that compartment is placed in contact with the electrocatalyst.

The electrochemical cell of the invention comprises anode and cathode compartments, first and second electrically conductive elements, respectively, within said compartments, and, between said compartments, a membrane as described above having a first layer of fluorinated polymer which has $-SO_3M$ groups and which faces toward the anode compartment and a second layer of fluorinated polymer which has $-OCF_2CF_2COOM$ moieties, each stratum of electrocatalyst present on the membrane being in contact with the electrically conductive element in that compartment which the stratum faces. When oxygen depolarized cathode technology is employed,

the cathode, cathode compartment, or current collector in that compartment, will have a gas inlet for introducing oxygen.

Each of the first and second electrically conductive elements can be either a current collector, or an electrode, i.e., respectively, a cathode and an anode. The current collectors and electrodes can be of any standard material and construction such as wire, mesh, perforated plates, expanded sheet, gas- and liquid-permeable porous metal, etc.

In one cell arrangement, the composite membrane/electrode has only a stratum A of anodic electrocatalyst on the first surface of the membrane. In this case, the first electrically conductive element, which is in the anode compartment, is a foraminous current collector and is in contact with stratum A. The second electrically conductive element, which is in the cathode compartment is a cathode. Preferably, the cathode has a cathodic electrocatalyst as set forth hereinabove on its surface, and, most preferably, will also be in contact with the second surface of the membrane so as to constitute a so-called zero-gap configuration. Such catalytically active cathode should be gas- and liquid- (or electrolyte-) permeable, i.e., either foraminous in those cases when it is desired to provide for easy removal of hydrogen, or microporous or foraminous in those cases when air, oxygen, or any gas mixture which comprises elemental oxygen is introduced so as to employ oxygen depolarized cathode technology by which overall cell voltage is lowered.

In another cell arrangement, the composite membrane/electrode has only a stratum B of cathodic

electrocatalyst on the second surface of the membrane. In this case, the second electrically conductive element, which is in the cathode compartment, is a current collector which is in contact with stratum B and which is gas- and liquid- (or electrolyte-) permeable, i.e., either foraminous or microporous as set forth in the previous paragraph in relation to a cathode. The first electrically conductive element, which is in the anode compartment, is an anode. Preferably, the anode has an anodic electrocatalyst as set forth hereinabove on its surface, and, most preferably, will also be in contact with the first surface of the membrane so as to constitute a zero-gap configuration.

In still another cell arrangement, the composite membrane/electrode has both stratum A of anodic electrocatalyst on the first surface of the membrane, and stratum B of cathodic electrocatalyst on the second surface of the membrane. In this case the first electrically conductive element is a foraminous current collector and is in contact with stratum A, and the second electrically conductive element is a current collector which is in contact with stratum B and which is gas- and liquid- (or electrolyte-) permeable, i.e., either foraminous or microporous as set forth in the previous paragraph.

The cell construction is such that a stratum of electrocatalyst of a composite membrane/electrode is contacted by an electrically conductive element, which is a current collector, in the compartment which the stratum faces, and the stratum functions as an electrode, i.e., as either an anode or a cathode, depending on which cell compartment it faces.

In the electrolysis process of the invention, an electrochemical cell of the kind

described hereinabove is employed. In this process, an aqueous solution of an alkali metal halide, preferably a chloride, most preferably sodium chloride, is introduced into the anode compartment of the cell, water or an aqueous alkali metal hydroxide, solution is introduced into the cathode compartment of the cell, and an electric current is passed through the cell, e.g., by applying an electric potential across the cathode and anode. Chlorine is removed from the anode compartment, along with spent alkali metal halide solution, and aqueous alkali metal hydroxide solution, preferably sodium hydroxide, is removed from the cathode compartment. When an ordinary non-catalytic cathode is used, hydrogen is also removed from the cathode compartment. When an oxygen depolarized cathode is used, hydrogen is not collected as a product. Ordinarily the feed to the cathode compartment is water or a dilute caustic solution.

To further illustrate the innovative aspects of the present invention, the following examples are provided.

In the examples, abbreviations are used as follows:

PTFE refers to polytetrafluoroethylene;

TFE/EVE refers to a copolymer of tetrafluoroethylene and methyl perfluoro(4,7-dioxa-5-methyl-8-nonenoate);

TFE/PSEPVE refers to a copolymer of tetrafluoroethylene and perfluoro(3,6-dioxa-4-methyl-7-octenesulfonyl fluoride);

EW refers to equivalent weight.

Example 1

A membrane was prepared by thermally bonding together the following layers.

A. A first surface layer consisting of a 102-micron (4 mil) layer of a TFE/PSEPVE copolymer having an equivalent weight of 1100.

B. A second surface layer consisting of a 51-micron (2 mil) layer of TFE/EVE copolymer having an equivalent weight of 1080.

The two layers were pressed together and passed through a thermal laminator with the A layer supported on a web of porous release paper. The temperature of the heated zone was adjusted such that the temperature of the polymer exiting the heated zone was 230-235°C as measured by an infrared measuring instrument.

After lamination, the membrane was hydrolyzed in an aqueous bath containing 30% dimethylsulfoxide and 11% KOH for 20 minutes at 90°C.

Separately, to 1 g of sodium nitrate were added 0.6 g of $RuCl_3$ and 0.2 g of $IrCl_3$, and after mixing, the mixture was fused at 500-600°C for 3 hours. The fused mixture was leached with distilled water to remove soluble nitrates and metal halides from an insoluble residue of mixed ruthenium and iridium oxides. The residue of mixed oxides was then further reduced by placing it in water and bubbling hydrogen through the suspension at room temperature for several hours, and this treatment was terminated before reduction to zero valent metal occurred. The resulting reduced, mixed oxides were thoroughly dried, ground, and sieved through a 400-mesh nylon screen. The mixed oxides which passed through the screen were then thermally stabiized by heating at 500-600°C for 1 hour.

A mixture of 323 mg of the thermally stabilized, reduced, mixed metal oxides in 0.2 g of a 65 percent solids aqueous polytetrafluoroethylene (PTFE) dispersion (Teflon® T-30 supplied by the Du Pont Company) which contains 130 mg of PTFE, was thoroughly blended. The blended mixture was placed on a sheet of a film of 4,4'-diaminodiphenyl ether polypyromellitimide, and spread with a No. 40 Mayer rod to cover an area of approximately 12.5 by 12.5 cm (5x5 inches). The spread mixture was allowed to air dry, a second like piece of polyimide film was placed over the spread mixture, and the assembly was pressed at 360°C under a pressure of $6.9 \times 10^5$ pascals (100 psi) for 5 minutes. A decal of the mixed oxides bonded together by PTFE was obtained by stripping the two polyimide films from it.

This decal was placed in contact with the exposed surface of the sulfonic (first) layer of a piece of the above-described hydrolyzed membrane. On each side of this subassembly was placed a piece of 4,4'-diaminodiphenyl ether polypyromellitimide film, and the whole assembly was heated in a press at 180°C under a pressure of $2.8 \times 10^6$ pascals (400 psi) for 2 minutes. The polyimide films were removed, and there was thus obtained a composite membrane/electrode having an anodic electrocatalyst stratum.

The composite membrane/electrode was mounted in a small chlor-alkali cell having an active area of 45 $cm^2$, with the electrocatalyst stratum and first polymer layer facing the anode compartment and the second polymer layer facing the cathode compartment. The current collector in the anode compartment was a dimensionally stable type consisting of a $RuO_2$ - $TiO_2$ coating on rolled titanium expanded metal mesh

and was arranged to contact the electrocatalyst layer on the membrane. The cathode was rolled mild steel expanded metal mesh and was arranged to contact the second polymer layer of the membrane. The cell was operated at 80°C with a current of 3.1 $KA/m^2$ to produce caustic and hydrogen in the cathode compartment, and chlorine in the anode compartment.

Example 2

A mixture of 500 mg of platinum black having a surface area greater than 25 $m^2/g$ in 0.2 g of a 65 percent solids aqueous PTFE dispersion (same type as in Example 1) which contains 130 mg of PTFE was thoroughly blended. A decal was prepared from the blended mixture using a procedure like that set forth in Example 1.

This decal was placed in contact with the exposed surface of the carboxylic (second) layer of another piece of the hydrolyzed membrane prepared in Example 1, and from this subassembly, using a procedure like that of Example 1, a composite membrane/electrode having a cathodic electrocatalyst stratum was made.

The composite membrane/electrode was mounted in a chloralkali cell as in Example 1. The anode was a dimensionally stable type consisting of a $RuO_2$-$TiO_2$ coating on rolled titanium expanded metal mesh and was arranged to contact the first polymer layer of the membrane. The current collector in the cathode compartment was rolled mild steel metal mesh, and was arranged to contact the electrocatalyst layer of the membrane. The cell was operated at 80°C with a current of 3.1 $KA/m^2$ to produce caustic and hydrogen in the cathode compartment, and chlorine in the anode compartment.

Example 3

A slurry of 0.40 g of graphite in 2 ml of a 65 percent solids aqueous PTFE dispersion (same type as in Example 1) was thoroughly blended. This slurry was spread onto the exposed surface of the carboxylic (second) layer of another piece of the hydrolyzed membrane prepared in Example 1, with the use of a No. 40 Mayer rod, to cover an area of approximately 12.5 by 12.5 cm, and allowed to dry in air at room temperature. The coated membrane was placed between polyimide films, heated at 200°C under a pressure of $3.5 \times 10^6$ pascals (500 psi) for 2 minutes, and the polyimide films stripped away from the resulting composite membrane/electrode.

The composite membrane/electrode was mounted in a chloralkali cell as set forth in Example 2. Brine was electrolyzed to produce caustic and hydrogen in the cathode compartment, and chlorine in the anode compartment.

INDUSTRIAL APPLICABILITY

The composite membrane/electrode of the present invention is technically advanced over those of the prior art. It exhibits improved performance characteristics when used in a chloroalkali cell, including operation at low voltage and high current efficiency, and thus at low power consumption. There is accordingly a substantial saving in operating costs resulting from the lowered consumption of power.

CLAIMS

1. A composite membrane/electrode which consists of an ion exchange membrane which is impermeable to hydraulic flow of liquid and which comprises at least first and second layers of perfluorinated polymer each having $-OCF_2CF_2COOM$ moieties and/or $-SO_3M$ functional groups, where M is Na or K, and equivalent weight up to 2000, adjacent said layers being in adherent contact with one another, said first layer being of polymer which has $-SO_3M$ functional groups and being at a first surface of said membrane, said second layer being of polymer which has $-OCF_2CF_2COOM$ moieties, and electrocatalyst bonded to at least one exposed surface of said membrane with a polymeric fluorocarbon binder, such that said electrocatalyst is in the form of at least one gas- and electrolyte-permeable stratum.

2. A membrane/electrode according to claim 1 wherein said $-SO_3M$ functional groups are present in $-OCF_2CF_2SO_3M$ moieties.

3. A membrane/electrode according to claim 1 or 2 wherein said second layer contacts said first layer and is at a second surface of said membrane.

4. A membrane/electrode according to claim 1 or 2 wherein there is a third layer of said perfluorinated polymer, said second layer being between said first and third layers, said third layer being at a second surface of said membrane, the polymer of said third layer having $-OCF_2CF_2SO_3M$ moieties.

5. A membrane/electrode according to claim 1 or 2 wherein there is a third layer of said perfluorinated polymer, said third layer being between said first and second layers, said second layer being at a second surface of said membrane, the polymer of said third layer having $-OCF_2CF_2SO_3M$ moieties and having an equivalent weight higher than that of the polymer of said first layer.

6. A membrane/electrode according to any one of the preceding claims wherein there is a stratum A of anodic electrocatalyst bonded to said first surface of said membrane.

7. A membrane/electrode according to any one of the preceding claims wherein there is a stratum B of cathodic electrocatalyst bonded to said second surface of said membrane.

8. A membrane/electrode according to any one of the preceding claims wherein said binder is polytetrafluoroethylene.

9. An electrochemical cell which comprises an anode compartment, a first electrically conductive element within said anode compartment, a cathode compartment, a second electrically conductive element within said cathode compartment, and, between said compartments, a composite membrane/electrode as claimed in any one of the preceding claims, said first surface of said membrane facing toward said anode compartment, said at least one stratum of electrocatalyst being in contact with the electrically conductive element in that compartment which said at least one stratum faces.

10. An electrochemical cell according to claim 9 wherein there is a foraminous current collector within said anode compartment and a foraminous or microporous cathode within said cathode compartment, said current collector being in contact with a said stratum of anodic electrocatalyst of said membrane/electrode.

11. An electrochemical cell according to claim 10 wherein said cathode has a cathodic electrocatalyst on its surface.

12. An electrochemical cell according to claim 11 wherein said cathode contacts said second surface of said membrane.

13. An electrochemical cell according to claim 9 wherein there is a foraminous anode within said anode compartment and a foraminous or microporous current collector within said cathode compartment, said current collector being in contact with a said stratum of cathodic electrocatalyst of said membrane/electrode.

14. An electrochemical cell according to claim 13 wherein said anode has an anodic electrocatalyst on its surface.

15. An electrochemical cell according to claim 14 wherein said anode contacts said first surface of said membrane.

16. An electrochemical cell according to claim 9 wherein there is a first current collector which is foraminous within said anode compartment and a second current collector which is foraminous or microporous within said cathode compartment, said first current collector being in contact with a said stratum of anodic electrocatalyst, and said second current collector being in contact with a said stratum of cathodic electrocatalyst, of said membrane/electrode.

17. The use in a process for the electrolysis of an alkali metal chloride in an electrochemical cell divided into anode and cathode compartments by a composite membrane/electrode wherein an aqueous alkali metal chloride solution is introduced into the anode compartment of said cell, water or an aqueous alkali metal hydroxide solution is introduced into the cathode compartment of said cell, an electric current is passed through said cell, and aqueous alkali metal hydroxide solution is removed from said cathode compartment and chlorine is removed from said anode compartment, of an electrochemical cell as claimed in any one of claims 9 to 16.

18. The use according to claim 17 wherein a gas comprising elemental oxygen is introduced into said cathode compartment.

0064838

European Patent Office

# EUROPEAN SEARCH REPORT

Application number

EP 82302190.2

| Category | Citation of document with indication, where appropriate, of relevant passages | Relevant to claim | CLASSIFICATION OF THE APPLICATION (Int. Cl. 3) |
|---|---|---|---|
| A | GB - A - 1 401 290 (PPG INDUSTRIES INC.)<br>* Claims 1,2; column 4, lines 31-39 *<br>-- | 1,2,9 | C 25 B 13/08<br>C 08 J 5/22 |
| P,X | EP - A1 - 0 041 734 (THE DOW CHEMICAL COMPANY) (16-12-1981)<br>* Claims 6,7 *<br>-- | 1,2,9 | |
| X | DE - A1 - 2 904 647 (TOYO SODA MANUFACTURING CO., LTD.)<br>* Claims 1,5,12; pages 7,8 *<br>& GB-A-2 014 590 & US-A-4 189 540<br>---- | 1,2,9 | |

TECHNICAL FIELDS SEARCHED (Int.Cl. 3)

C 25 B
C 08 J

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| VIENNA | 23-07-1982 | HEIN |

EPO Form 1503.1 06.78